# EUROPÄISCHE PATENTSCHRIFT

(11) **EP 2 314 413 B1**
(45) Veröffentlichungstag und Bekanntmachung des Hinweises auf die Patenterteilung: **18.01.2012**
(21) Anmeldenummer: 10008193.4
(22) Anmeldetag: 05.08.2010
(51) Int. Cl.: B23Q 1/01, B23Q 3/157

(54) **Vertikales Bearbeitungszentrum in Gantry-Bauform mit einem kreisringförmigen Werkzeugmagazin innerhalb des Bearbeitungszentrums**
Vertical processing centre in gantry form with a circular ring tool cartridge within the processing centre
Centre de traitement vertical dans une construction Gantry à l'aide d'un magasin d'outils en forme d'anneau circulaire à l'intérieur du centre de traitement

(30) Priorität: 21.10.2009 DE 102009050174
(43) Veröffentlichungstag der Anmeldung: 27.04.2011
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, Dipl.-Ing.(FH), 78598 Königsheim (DE)
(74) Vertreter: Hager, Thomas Johannes

(56) Entgegenhaltungen:
- EP-A1- 1 430 991
- DE-A1- 1 552 326
- DE-A1-102004 004 935
- DE-A1-102007 004 633
- DE-U1-202005 021 011
- FR-A- 1 542 904
- US-A- 5 704 884

## Beschreibung

Die Erfindung betrifft ein vertikales Bearbeitungszentrum, insbes. zum Fräsen, Drehen und Bohren, in Gantry-Bauform mit einem zwei Seitenwandungen aufweisenden U-förmigen Maschinengestell mit einem im Bearbeitungszentrum integrierten und in einer horizontalen Ebene angeordneten kreisringsförmig aufgebauten Werkzeugmagazin mit einem um eine vertikale Achse drehbar gelagerten Magazinring mit Werkzeughaltern zur Aufnahme von Bearbeitungswerkzeugen sowie mit einem zwischen Werkzeugmagazin und Werkzeugspindel vorgesehenen Werkzeugübergabeplatz zum Ein- und Auswechseln eines Werkzeugs vom Werkzeugmagazin in die Werkzeugspindel und umgekehrt und mit einem Längsschlitten, der mit Hilfe horizontal angeordneter Führungsschienen geführt wird, wobei auf den beiden Seitenwandungen zwei parallele Führungsschienen angeordnet sind und wobei wenigstens eine weitere Führungsschiene parallel und im Wesentlichen mittig zwischen den beiden anderen Führungsschienen in Längsrichtung, aber versetzt dazu angeordnet ist und der Längsschlitten mit Führungselementen an den Führungsschienen geführt ist.

Der bisherige Stand der Technik bei einem vertikalen Bearbeitungszentrum in Gantry-Bauform mit integriertem Werkzeugmagazin und einem Werkzeugwechsel im Pick-up-Verfahren besteht darin, dass das kreisringförmige Werkzeugmagazin einen über ein Zahnradgetriebe angetriebenen Magazinring mit Werkzeughaltern aufweist, wobei der drehbare Magazinring mit den Werkzeughaltern um eine vertikal ausgerichtete Mittelachse gelagert ist und zwischen den Seitenwandungen des U-förmigen Maschinengestells angeordnet ist. Der Grund für die Anordnung zwischen den Seitenwandungen ist darin zu sehen, dass die linearen Führungsschlitten (Längsschlitten in Y-Richtung, Querschlitten in X-Richtung und Vertikalschlitten in Z-Richtung) bei einem vertikalen Bearbeitungszentrum in Gantry-Bauform immer in den Bereich des Werkzeugmagazins hineinreichen, so dass die beiden Seitenwandungen für die Aufnahme der linearen Führungsschlitten auch funktionsbedingt nach hinten im Bereich der Werkzeugmagazins ausgebildet werden müssen, um einen entsprechenden Verfahrweg der Werkzeugspindel in Maschinenlängsrichtung (Y-Richtung) realisieren zu können. Bei einem Bearbeitungszentrum in Gantry-Bauform tragen die Seitenwandungen immer die linearen Führungsschienen für die Aufnahme des Längsschlittens.

Die Ausführung nach dem Stand der Technik hat den großen Nachteil, dass der Durchmesser des drehbaren Magazinrings und somit die Speicherkapazität an Werkzeugen im Werkzeugmagazin immer durch die Seitenwandungen, d. h. durch die geometrischen Abmessungen des Maschinenbettes, begrenzt ist. Eine Erweiterung der Speicherkapazität an Werkzeugen, z. B. durch eine Durchmesservergrößerung des Magazinrings, ist somit mit einfachen Mitteln nicht möglich. Aus diesem Grund wird bei einem vertikalen Bearbeitungszentrum in Gantry-Bauform das kreisringförmige Werkzeugmagazin bzw. der bewegliche Magazinring oft durch ein Kettenmagazin mit einem umlaufenden Förderband, an dem die Werkzeughalter angebracht sind, ersetzt. So eine Ausgestaltung bei einem vertikalen Bearbeitungszentrum in Gantry-Bauform ist in der DE 10 2004 004 935 B4 offenbart. Bei einem Kettenmagazin mit einem umlaufenden Förderband kann durch Vergrößerung der Achsabstände der Umlenkrollen in Maschinenlängsrichtung die Speicherkapazität relativ einfach verändert werden. Die Speicherkapazität des Werkzeugmagazins wird bei dieser Bauform nicht durch die Seitenwandungen des U-förmigen Maschinengestells begrenzt. Das Kettenmagazin mit einem umlaufenden Förderband hat aber gegenüber einem kreisringsförmigen Werkzeugmagazin mit einem drehbaren Magazinring den großen Nachteil, dass der gesamte mechanische Aufbau relativ aufwendig und störanfällig ist. Außerdem kann mit einem Kettenmagazin nicht so schnell und präzise verfahren werden wie mit einem drehbar gelagerten Magazinring. Bei einem Kettenmagazin hat man aufgrund der Förderkette immer einen sogenannten Polygoneffekt. Dieser entsteht dadurch, dass die Länge des Kettenstranges (Polygonzug der einzelnen Kettenglieder) im Umlenkungsbereich nicht mit der Umfangslänge der Kullissenbahn übereinstimmt. Der Polygoneffekt führt daher zu verschlechterten Laufeigenschaften des Kettenmagazins bis hin zum Klemmen des Kettenstranges. Aus diesem Grund kann mit einem Kettenmagazin nie so schnell verfahren werden wie mit einem drehbaren Magazinring, der über ein Zahnradgetriebe (Zahnkranz am Magazinring und Zahnritzel am Antriebsmotor) angetrieben wird. Mit einem Kettenmagazin können in der Regel keine so schnellen Werkzeugwechselzeiten realisiert werden wie mit einem Magazinring, der über ein Zahnradgetriebe angetrieben wird.

Ausgehend von diesem Stand der Technik liegt der vorliegenden Erfindung die Aufgabe zugrunde, die bekannte Lösung unter Beibehaltung ihrer Vorteile dahingehend weiter zu verbessern, dass durch das U-förmige Maschinengestell die Speicherkapazität eines kreisförmigen Werkzeugmagazins nicht mehr beeinträchtigt wird und die Speicherkapazität des Werkzeugmagazins somit unabhängig von der Maschinengröße ist. Denn die Maschinengröße eines Bearbeitungszentrums in Gantry-Bauform, z. B. die für die Bearbeitung nutzbaren Verfahrbewegungen in X- und Y-Richtung, werden wesentlich durch die Breite und Länge des U-förmige Maschinengestells bestimmt.

Diese Aufgabe wird bei einem vertikalen Bearbeitungszentrum, insbes. zum Fräsen, Drehen und Bohren, in Gantry-Bauform mit einem zwei Seitenwandungen aufweisenden U-förmigen Maschinengestell mit einem im Bearbeitungszentrum integrierten und in einer horizontalen Ebene angeordneten kreisringsförmig aufgebauten Werkzeugmagazin mit einem um eine vertikale Achse drehbar gelagerten Magazinring mit Werkzeughaltern zur Aufnahme von Bearbeitungswerkzeugen sowie mit einem zwischen Werkzeugmagazin und Werkzeugspindel vorgesehenen Werkzeugübergabeplatz zum Ein-und Auswechseln eines Werkzeugs vom Werkzeugmagazin in die Werkzeugspindel und umgekehrt und mit einem Längsschlitten, der mit Hilfe von horizontal angeordneten Führungsschienen geführt wird, wobei auf den beiden Seitenwandungen zwei parallele Führungsschienen angeordnet sind und wobei wenigstens eine weitere Führungsschiene parallel und im Wesentlichen mittig zwischen den beiden anderen Führungsschienen in Längsrichtung, aber versetzt dazu angeordnet ist und der Längsschlitten mit Führungselementen an den Führungsschienen geführt ist, erfindungsgemäß dadurch gelöst, dass die Seitenwandungen des U-förmigen Maschinengestells den äußeren Störkreisumfang des Magazinrings nur in einem Verhältnis begrenzen, bei dem die Kreissehne des durch die Seitenwandungen eingeschlossenen Kreissegments des Magazinrings immer kleiner ist als der Kreisdurchmesser des äußeren Störkreisumfangs des Magazinrings.

Infolge dieser Ausgestaltung ist es ohne großen Aufwand möglich, die Speicherkapazität des Magazinrings zu erhöhen, indem der Kreisdurchmesser des Magazinrings einfach vergrößert wird, um somit mehr Werkzeughalter am Umfang des Magazinrings anordnen zu können.

Die Anmelderin hat in überraschender Weise erkannt, dass entgegen der üblichen Fachmeinung auch bei einem Bearbeitungszentrum in Gantry-Bauform das im Bearbeitungszentrum integrierte kreisringförmige Werkzeugmagazin nicht in jeden Fall durch die Seitenwandungen begrenzt werden muss. Besonders bei kleinen Maschinenabmessungen, d. h. Länge und Breite des Maschinengestells sind relativ klein, ist diese Bauweise von großem Vorteil, da ansonsten die Speicherkapazität des kreisringförmigen Werkzeugmagazins durch den relativ geringen Raum zwischen den Seitenwandungen zu stark eingeschränkt wird, so dass keine sinnvolle Bearbeitung mehr möglich wird. Bei den heutzutage durchzuführenden, sehr komplexen Bearbeitungsaufgaben wird immer eine Vielzahl von unterschiedlichen Werkzeugen benötigt, und diese Werkzeuge müssen durch ein Werkzeugmagazin in ausreichend großer Speicherkapazität bereitgestellt werden.

Vorteilhafte Weiterbildungen ergeben sich aus den Unteransprüchen.

Gemäß einer bevorzugten Ausgestaltung ist im Arbeitsbereich der Werkzeugspindel ein schwenk- und drehbarer Werkstücktisch angeordnet, wobei die Lagerstellen für das Verschwenken des Werkstücktisches in den Seitenwandungen des U-förmigen Maschinengestells angeordnet sind.

Vorteilhafterweise dient als Antrieb für die Schwenkbewegung ein rotorischer Direktantrieb, insbes. ein Torqueantrieb, der in den Seitenwandungen an oder um die Lagerstellen angeordnet ist.

Der Torqueantrieb kann gemäß einer bevorzugten Weiterbildung einseitig oder beidseitig angeordnet werden.

Um die Betriebssicherheit zu erhöhen, kann der Torqueantrieb mit einer Fail-Safe-Klemmung ausgestattet sein, die im Energieausfall den Werkstücktisch in einer sicheren Position hält.

Gemäß einer weiteren bevorzugten Ausgestaltung sind die Werkzeughalter am äußeren Umfang des Magazinrads angeordnet und bestehen aus einem elastisch verformbaren Kunststoff. Somit kann bei einem Werkzeugwechsel das Bearbeitungswerkzeug durch die Werkzeugspindel in die Öffnung des elastische verformbaren Werkzeughalter ein-oder ausgedrückt werden.

Gemäß einer weiteren bevorzugten Ausgestaltung ist im hinteren Bereich des U-förmigen Maschinengestells, im vom Arbeitsbereich der Werkzeugspindel abgewandten Bereich, ein Konsolenfuß mit einer Auslegerkonsole angebracht, der eine Auflagefläche für eine weitere Führungsschiene bildet.

Gemäß einer weiteren bevorzugten Ausgestaltung ist auf dem in Y-Richtung verfahrbaren Längsschlitten ein in X-Richtung verfahrbarer Querschlitten angeordnet, der als Aufnahme eines in Z-Richtung verfahrbaren Vertikalschlittens dient.

Der Vertikalschlitten besitzt vorteilhafterweise eine Aufnahme für die Werkzeugspindel.

Weitere Merkmale, Vorteile und Ausgestaltungen ergeben sich aus der nachfolgenden Beschreibung eines Ausführungsbeispiels. Es zeigen:

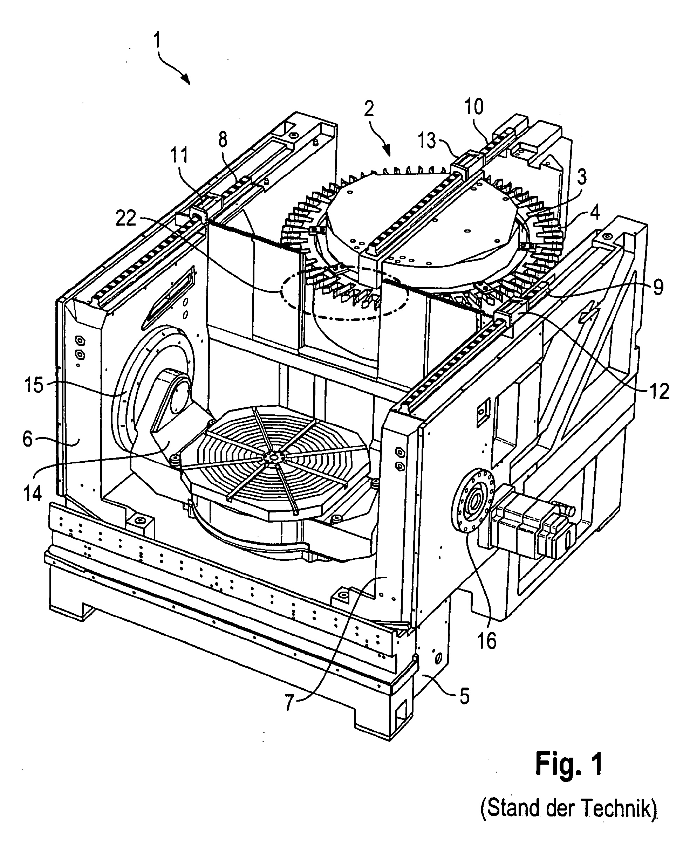

- Figur 1: ein vertikales Bearbeitungszentrum nach dem Stand der Technik in per- spektivischer Ansicht,
- Figur 2: ein vertikales Bearbeitungszentrum nach der Erfindung in perspektivischer Ansicht,
- Figur 3: eine Draufsicht auf das erfindungsgemäße Bearbeitungszentrum mit kreis- ringförmigen Werkzeugmagazinen verschiedener Größe.

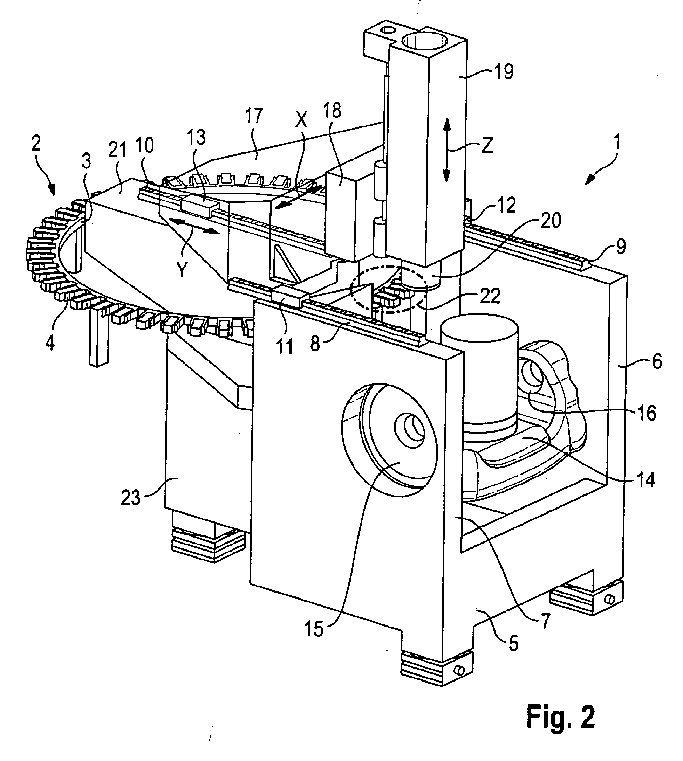

In Figur 2 ist ein vertikales Bearbeitungszentrum 1 dargestellt, das insbes. zum Fräsen, Drehen und Bohren dient, und in Gantry-Bauform aufgebaut ist. Das Bearbeitungszentrum 1 weist ein U-förmiges Maschinengestell 5 und ein in das Bearbeitungszentrum 1 integriertes und in einer horizontalen Ebene angeordnetes kreisringsförmig aufgebautes Werkzeugmagazin 2 auf. Das Werkzeugmagazin 2 umfasst einen um eine vertikale Achse drehbar gelagerten Magazinring 3 mit Werkzeughaltern 4, die zur Aufnahme von (nicht dargestellten) Bearbeitungswerkzeugen dienen. Zwischen dem Werkzeugmagazin 2 und einer Werkzeugspindel 20 ist ein Werkzeugübergabeplatz 22 vorgesehen, der zum Ein- und Auswechseln eines Bearbeitungswerkzeugs vom Werkzeugmagazin 2 in die Werkzeugspindel 20 und umgekehrt dient. Dabei wird ein sogenanntes Pick-up-Verfahren verwendet. Das Bearbeitungszentrum 1 ist ferner mit einem Längsschlitten 17 versehen, der mit Hilfe von drei horizontal angeordneten Führungsschienen 8, 9, 10 geführt ist. Dabei sind auf den beiden Seitenwandungen 6, 7 zwei parallele Führungsschienen 8, 9 angeordnet, und die dritte Führungsschiene 10 ist parallel und im Wesentlichen mittig zwischen den beiden anderen Führungsschienen 8, 9 in Längsrichtung, aber versetzt dazu, angeordnet. Der Längsschlitten 17 ist mit wenigstens drei Führungselementen 11, 12, 13 an den drei Führungsschienen 8, 9, 10 geführt ist, wobei anzumerken ist, dass neben den beiden äußeren Führungsschienen 8, 9 auf den beiden Seitenwandungen 6, 7 auch mehr als nur eine weitere horizontale Führungsschiene 10 vorsehbar sind.

Im Arbeitsbereich der Werkzeugspindel 20 ist ein schwenk- und drehbarer Werkstücktisch 14 angeordnet, wobei die Lagerstellen 15, 16 für das Verschwenken des Werkstücktisches 14 in den Seitenwandungen 6, 7 des U-förmigen Maschinengestells 5 angeordnet sind.

Als Antrieb für die Schwenkbewegung des Werkstücktisches 14 dient ein rotorischer Direktantrieb, vorzugsweise ein Torqueantrieb, der in den Seitenwandungen 6, 7 an oder um die Lagerstellen 15, 16 angeordnet ist. Der Torqueantrieb kann einseitig oder beidseitig angeordnet sein.

Bei Bedarf kann der Torqueantrieb auch noch mit einer Fail-Safe-Klemmung ausgestattet sein, die im Energieausfall den Werkstücktisch 14 in einer sicheren Position hält.

Auf dem in Y-Richtung verfahrbaren Längsschlitten 17 ist ein in X-Richtung verfahrbarer Querschlitten 18 angeordnet, der wiederum für die Aufnahme eines in Z-Richtung verfahrbaren Vertikalschlittens 19 dient.

Der Vertikalschlitten 19 kann noch eine Aufnahme für die Werkzeugspindel 20 besitzen.

Weiterhin ist im hinteren Bereich des U-förmigen Maschinengestells 5 im vom Arbeitsbereich der Werkzeugspindel 20 abgewandten Bereich ein Konsolenfuß 23 mit einer Auslegerkonsole 2 angebracht, der eine Auflagefläche für die dritte oder weitere Führungsschienen 10 bildet.

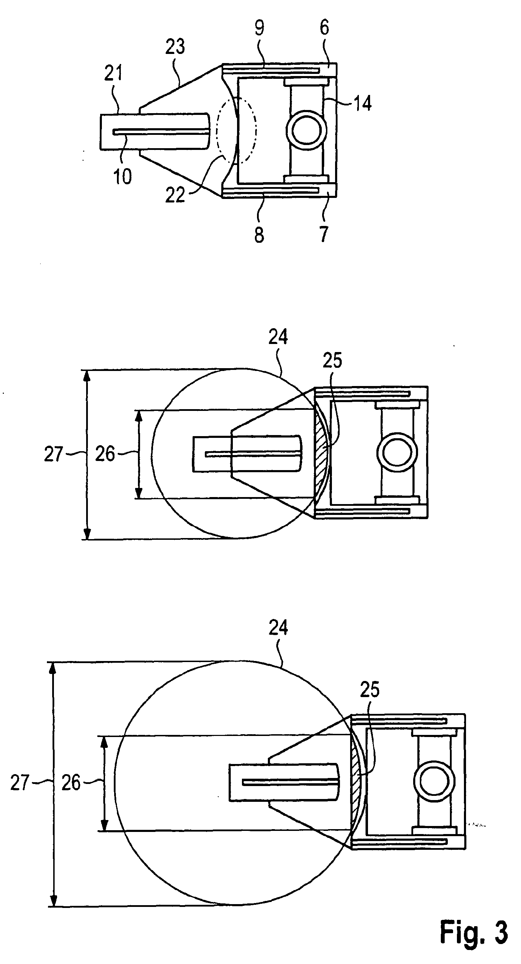

Wie sich insbes. der Figur 3 entnehmen lässt, steht infolge der erfindungsgemäßen Ausgestaltung das kreisringförmige Werkzeugmagazin 2 bzw. dessen Magazinring 3 seitlich über die Seitenwandungen 6, 7 des U-förmigen Maschinengestells 5 über. Dabei ist der Magazinring 3 derart bemessen, dass die Seitenwandungen 6, 7 des U-förmigen Maschinengestells 5 den äußeren Störkreisumfang 24 des Magazinrings 3 nur in einem Verhältnis begrenzen, bei dem die Kreissehne 26 des durch die Seitenwandungen 6, 7 eingeschlossenen Kreissegments 25 des Magazinrings 3 immer kleiner ist als der Kreisdurchmesser 27 des äußeren Störkreisumfangs 24 des Magazinrings 3.

Infolge dieser Ausgestaltung ist es ohne großen Aufwand möglich, die Speicherkapazität des Magazinrings 3 des kreisringförmigen Werkzeugmagazins 2 zu erhöhen.

### Bezugszeichenliste:

- 1: Bearbeitungszentrum
- 2: kreisringförmiges Werkzeugmagazin
- 3: Magazinring
- 4: Werkzeughalter
- 5: U-förmiges Maschinengestell
- 6: Seitenwandung
- 7: Seitenwandung
- 8: Führungsschiene
- 9: Führungsschiene
- 10: Führungsschiene
- 11: Führungselemente (Führungsschuh)
- 12: Führungselemente (Führungsschuh)
- 13: Führungselemente (Führungsschuh)
- 14: Werkstücktisch
- 15: Lagerstellen
- 16: Lagerstellen
- 17: Längsschlitten
- 18: Querschlitten
- 19: Vertikalschlitten
- 20: Werkzeugspindel
- 21: Auslegerkonsole
- 22: Werkzeugübergabeplatz
- 23: Konsolenfuß
- 24: Störkreisumfang
- 25: Kreissegment
- 26: Kreissehne
- 27: Kreisdurchmesser

## Patentansprüche

1. Vertikales Bearbeitungszentrum (1), insbes. zum Fräsen, Drehen und Bohren, in Gantry-Bauform mit einem zwei Seitenwandungen (6, 7) aufweisenden U-förmigen Maschinengestell (5) mit einem im Bearbeitungszentrum (1) integrierten und in einer horizontalen Ebene angeordneten kreisringsförmig aufgebauten Werkzeugmagazin (2) mit einem um eine vertikale Achse drehbar gelagerten Magazinring (3) mit Werkzeughaltern (4) zur Aufnahme von Bearbeitungswerkzeugen sowie mit einem zwischen Werkzeugmagazin (2) und Werkzeugspindel (20) vorgesehenen Werkzeugübergabeplatz (22) zum Ein- und Auswechseln eines Werkzeugs vom Werkzeugmagazin (2) in die Werkzeugspindel (20) und umgekehrt und mit einem Längsschlitten (17), der mit Hilfe von horizontal angeordneten Führungsschienen (8, 9, 10) geführt wird, wobei auf den beiden Seitenwandungen (6, 7) zwei parallele Führungsschienen (8, 9) angeordnet sind und wobei wenigstens eine weitere Führungsschiene (10) parallel und im Wesentlichen mittig zwischen den beiden anderen Führungsschienen (8, 9) in Längsrichtung, aber versetzt dazu angeordnet ist und der Längsschlitten (17) mit Führungselementen (11, 12, 13) an den Führungsschienen (8, 9, 10) geführt ist,
**dadurch gekennzeichnet, dass**
die Seitenwandungen (6, 7) des U-förmigen Maschinengestells (5) den äußeren Störkreisumfang (24) des Magazinrings (3) nur in einem Verhältnis begrenzen, bei dem die Kreissehne (26) des durch die Seitenwandungen (6, 7) eingeschlossenen Kreissegments (25) des Magazinrings (3) immer kleiner ist als der Kreisdurchmesser (27) des äußeren Störkreisumfangs (24) des Magazinrings (3).

2. Vertikales Bearbeitungszentrum (1) nach Anspruch 1, **dadurch gekennzeichnet, dass** im Arbeitsbereich der Werkzeugspindel (20) ein schwenk- und drehbarer Werkstücktisch (14) angeordnet ist, wobei die Lagerstellen (15, 16) für das Verschwenken des Werkstücktisches (14) in den Seitenwandungen (6, 7) des U-förmigen Maschinengestells (5) angeordnet sind.

3. Vertikales Bearbeitungszentrum (1) nach Anspruch 1 oder 2, **dadurch gekennzeichnet, dass** als Antrieb für die Schwenkbewegung des Werkstücktisches (14) ein rotorischer Direktantrieb, vorzugsweise ein Torqueantrieb, in den Seitenwandungen (6, 7) an oder um die Lagerstellen (15, 16) angeordnet ist.

4. Vertikales Bearbeitungszentrum (1) nach Anspruch 3, **dadurch gekennzeichnet, dass** der Torqueantrieb einseitig oder beidseitig angeordnet ist.

5. Vertikales Bearbeitungszentrum (1) nach Anspruch 4, **dadurch gekennzeichnet, dass** der Torqueantrieb mit einer Fail-Safe-Klemmung ausgestattet ist, die im Energieausfall den Werkstücktisch (14) in einer sicheren Position hält.

6. Vertikales Bearbeitungszentrum (1) nach einem der vorhergehenden Ansprüche, **dadurch gekennzeichnet, dass** die Werkzeughalter (4) am äußeren Umfang des Magazinrings (3) angeordnet sind und aus einem elastisch verformbaren Kunststoff bestehen.

7. Vertikales Bearbeitungszentrum (1) nach einem der vorhergehenden Ansprüche, **dadurch gekennzeichnet, dass** im hinteren Bereich des U-förmigen Maschinengestells (5) im vom Arbeitsbereich der Werkzeugspindel (20) abgewandten Bereich ein Konsolenfuß (23) mit einer Auslegerkonsole (21) angebracht ist, um eine Auflagefläche für eine weitere Führungsschiene (10) zu bilden.

8. Vertikales Bearbeitungszentrum (1) nach einem der vorhergehenden Ansprüche, **dadurch gekennzeichnet, dass** auf dem in Y-Richtung verfahrbaren Längsschlitten (17) ein in X-Richtung verfahrbarer Querschlitten (18) angeordnet ist, der für die Aufnahme eines in Z-Richtung verfahrbaren Vertikalschlittens (19) dient.

9. Vertikales Bearbeitungszentrum (1) nach Anspruch 8, **dadurch gekennzeichnet, dass** der Vertikalschlitten (19) eine Aufnahme für die Werkzeugspindel (20) besitzt.

## Claims

1. A vertical processing center (1), in particular for milling, lathing and drilling, in Gantry design having a U-shaped machine frame (5) with two side walls (6, 7), including a tool magazine (2) structured in the shape of a circular ring, that is integrated in the processing center (1) and arranged in a horizontal plane, including a magazine ring (3) supported rotatably about a vertical axis, having tool holders (4) for receiving processing tools as well as including a tool handover spot (22) provided between the tool magazine (2) and a tool spindle (20) for inserting and exchanging a tool from the tool magazine (2) into the tool spindle (20) and vice-versa, and including a longitudinal carriage (17) which is guided by means of horizontally arranged guide rails (8, 9, 10), wherein two parallel guide rails (8, 9) are arranged on the two side walls (6, 7) and wherein at least one further guide rail (10) is arranged in parallel with and substantially centered between the two other guide rails (8, 9) in the longitudinal direction but staggered thereto, and the longitudinal carriage (17) is guided at the guide rails (8, 9, 10) by means of guide members (11, 12, 13),
**characterized in that**
the side walls (6, 7) of the U-shaped machine frame (5) delimit the outer interference periphery (24) of the magazine ring (3) only in a ratio in which the chord (26) of the circular segment (25) of the magazine ring (3) enclosed by the side walls (6, 7) is always smaller than the circular diameter (27) of the outer interference periphery (24) of the magazine ring (3).

2. The vertical processing center (1) of claim 1, **characterized in that** a pivotal and rotatable workpiece table (14) is arranged in the working area of the tool spindle (20), wherein the bearing positions (15, 16) for the pivoting of the workpiece table (14) are arranged in the side walls (6, 7) of the U-shaped machine frame (5).

3. The vertical processing center (1) of claim 1 or 2, **characterized in that** a rotating direct drive, preferably a torque drive, is arranged in the side walls (6, 7) at or about the bearing positions (15, 16) as a drive for the pivoting motion of the workpiece table (14).

4. The vertical processing center (1) of claim 3, **characterized in that** the torque drive is arranged on one side or on both sides.

5. The vertical processing center (1) of claim 4, **characterized in that** the torque drive is provided with a fail-safe clamping which maintains the workpiece table (14) in a secure position in case of a power failure.

6. The vertical processing center (1) of one of the preceding claims, **characterized in that** the tool holder (4) is arranged at the outer periphery of the magazine ring (3) and consists of an elastically deformable plastic.

7. The vertical processing center (1) of one of the preceding claims, **characterized in that** a cantilever base (23) including a cantilever arm (21) is arranged in the rear portion of the U-shaped machine frame (5) in the region facing away from the working area of the tool spindle (20), in order to form a support surface for a further guide rail (10).

8. The vertical processing center (1) of one of the preceding claims, **characterized in that** a cross carriage (18) displaceable in the X-direction is arranged on the longitudinal carriage (17) displaceable in the Y-direction, which serves to receive a vertical carriage (19) displaceable in the Z-direction.

9. The vertical processing center (1) of claim 8, **characterized in that** the vertical carriage (19) has an insert for the tool spindle (20).

## Revendications

1. Centre d'usinage vertical (1), en particulier pour le fraisage, le tournage et le forage, dans une construction Gantry, avec un bâti de machine (5) en forme de U, présentant deux parois latérales (6, 7), avec un magasin d'outils (2) intégré dans le centre d'usinage (1), disposé dans un plan horizontal et constitué en forme d'anneau de cercle avec un anneau de magasin (3) logé de manière à pouvoir tourner autour d'un axe vertical avec des porte-outils (4) pour la réception d'outils d'usinage ainsi qu'avec un poste de remise d'outils (22) prévu entre le magasin d'outils (2) et la broche d'outil (20) pour le remplacement d'un outil du magasin d'outils (2) dans la broche d'outil (20) et inversement et avec un chariot longitudinal (17) qui est guidé à l'aide de rails de guidage (8, 9, 10) disposés horizontalement, sachant que deux rails de guidage (8, 9) parallèles sont disposés sur les deux parois latérales (6, 7) et sachant qu'au moins un autre rail de guidage (10) est disposé parallèlement et sensiblement au milieu entre les deux autres rails de guidage (8, 9) dans le sens longitudinal mais en déport de ceux-ci et le chariot longitudinal (17) est guidé avec des éléments de guidage (11, 12, 13) sur les rails de guidage (8, 9, 10),
**caractérisé en ce que** les parois latérales (6, 7) du bâti de machine en forme de U (5) délimitent la circonférence anormale extérieure (24) de l'anneau de magasin (3) seulement dans un rapport, pour lequel la corde (26) du segment circulaire (25) formé par les parois latérales (6, 7) de l'anneau de magasin (3) est de plus en plus petite par rapport au diamètre circulaire (27) de la circonférence anormale (24) extérieure de l'anneau de magasin (3).

2. Centre d'usinage vertical (1) selon la revendication 1, **caractérisé en ce qu'**une table porte-pièce (14) pouvant pivoter et tourner est disposée dans la zone de travail de la broche d'outil (20), sachant que les points d'appui (15, 16) sont disposés pour le pivotement de la table porte-pièce (14) dans les parois latérales (6, 7) du bâti de machine (5) en forme de U.

3. Centre d'usinage vertical (1) selon la revendication 1 ou 2, **caractérisé en ce qu'**un entraînement direct rotationnel, de préférence un entraînement à couple, est disposé comme entraînement pour le mouvement pivotant de la table porte-pièce (14) dans les parois latérales (6, 7) sur ou autour des points d'appui (15, 16).

4. Centre d'usinage vertical (1) selon la revendication 3, **caractérisé en ce que** l'entraînement à couple est disposé d'un côté ou des deux côtés.

5. Centre d'usinage vertical (1) selon la revendication 4, **caractérisé en ce que** l'entraînement à couple est équipé d'un serrage à sûreté intégré qui maintient dans une position sûre la table porte-pièce (14) en cas de défaut d'énergie.

6. Centre d'usinage vertical (1) selon l'une quelconque des revendications précédentes, **caractérisé en ce que** les porte-outils (4) sont disposés sur la périphérie extérieure de l'anneau de magasin (3) et se composent d'un plastique déformable élastiquement.

7. Centre d'usinage vertical (1) selon l'une quelconque des revendications précédentes, **caractérisé en ce qu'**un pied de console (23) avec une console à bras (21) est monté dans la zone arrière du bâti de machine en forme de U (5) dans la zone éloignée de la zone de travail de la broche d'outil (20).

8. Centre d'usinage vertical (1) selon l'une quelconque des revendications précédentes, **caractérisé en ce qu'**un chariot transversal (18) mobile dans le sens X est disposé sur le chariot longitudinal (17) mobile dans le sens Y, lequel chariot sert de logement à un chariot vertical (19) mobile dans le sens Z.

9. Centre d'usinage vertical (1) selon la revendication 8, **caractérisé en ce que** le chariot vertical (19) possède un logement pour la broche d'outil (20).
